Europäisches Patentamt

European Patent Office

Office européen des brevets

(11) Publication number: **0 396 825**
**A1**

# EUROPEAN PATENT APPLICATION

(21) Application number: 89201200.6

(51) Int. Cl.5: **B25J 15/02**

(22) Date of filing: **12.05.89**

(43) Date of publication of application:
**14.11.90 Bulletin 90/46**

(84) Designated Contracting States:
**AT BE CH DE ES FR GB GR IT LI LU NL SE**

(71) Applicant: **M.S. AUTOMATION S.R.L.**
**Via Vizzani, 72/G**
**I-40138 Bologna(IT)**

(72) Inventor: **Salmon, Mario**
**Via Vizzani, 7/2**
**I-40138 Bologna(IT)**

(74) Representative: **Rinaldi, Carlo**
**c.o. Studio Brevetti Nazionali ed Esteri**
**dell'Ing. Carlo Rinaldi & C. s.d.f. Piazza di**
**Porta Castiglione, 16**
**I-40136 Bologna(IT)**

(54) **Device adapted to actuate remote straightline and rotative movements with control of the forces transmitted.**

(57) A device adapted to actuate remote straight-line and rotative movements with control of the forces transmitted is disclosed which comprises: a hydraulic actuator (13,27) including an active part (15,30) able to carry out angular and straight-line movements and kinematically connected with a movable structure (26,37) to transmit operative forces to said structure (26,37); a control system (11) for the actuator (13,27) able to detect the momentary position of the structure (26,37) due to the operative forces and to transform said positions or the forces in first electrical signals; a control unit (25,40) connected with the actuator (13,27) via pipings (23,24,38,39); the control unit (25,40) is able to define the difference between the fluid pressure acting on the two opposite surfaces of the operative part (15,30) as a function of the first electrical signals and of second electrical signals, stored in the control unit (25,40); the second electrical signal representing predetermined momentary positions or predetermined operative forces values.

FIG.1

The present invention relates to a device adapted to actuate remote shiftings and to control the forces transmitted, of automatic machine operating elements, of robot systems grasping devices, articulations or joints, in order to achieve light structures able to operate in a various and controlled way.

Mechanisms are known from prior art able to actuate and control remote shiftings, both straight-line and rotative, of automatic machines operating elements or of industrial robots grasping devices (pincers), articulations and arms.

Among these mechanisms we may take into consideration those consisting of flexible cables and sheaths, of flexible shafts, of driving belts, or rigid shafts or of hydraulic motors kinematically connected, for example by articulations, with the operating or grasping elements, with the articulations or the joints.

The disadvantages peculiar to the above mechanisms, and which involve them to be inapplicable to robot systems, are essentially caused by clearances, by their weight and/or elasticity. As a result, these mechanisms undergo vibrations and are not much reliable relative to the repeatability of the transmission of movements to the robot on which they are mounted.

Furthermore, these mechanisms are void of devices able to measure the forces they transmit to the robots, therefore they do not permit to achieve an active control on the movements and/or on the grasping methods.

Generally, the experience demonstrates that there are not remote control mechanisms achieving acceptable values of:
- weight of the movable parts;
- rigidity of the trasmission of movement;
- measure of the forces transmitted during the movement;
such to achieve light robots void of masses on the movable parts, in particular on the ends thereof, however, fitted with rigid structures, by which the movement of the motors is transmitted to the actuating means without clearances and, preferably, with short kinematic chains.

These are two contrasting necessities in fact, the use of short kinematic chains requests the actuating motors to be located on the movable part of the above-mentioned devices thus causing an excessive increase of the same movable masses.

Furthermore, it has been experienced that the known mechanisms do not allow to obtain robots having good attitudes in grasping different objects in different ways; it is only possible to obtain robots specialized in handling specific objects in predetermined ways.

The present invention is intended to remedy these drawbacks. The invention, as it is characterized by the attached claims, solves the problem of how to create a device adapted to actuate remote straight-line and rotative movements with control of the forces transmitted. By using a device according to the present invention, the following result is achieved: it is possible to measure the operating forces and to obtain good characteristics of transmission of movement in terms of clearances, efficiencies and hysteresis.

The advantages achieved by using the present invention consist essentially in the fact that the remote operation of the joints and of the grasping elements by the device is accomplished by using light-weight movable parts.

In a first embodiment, the present invention consists of: a hydraulic actuator fitted with an operative part, adapted to carry out angular and straight-line movements, and kinematically connected with a movable structure for transmitting operative forces thereto, a control system for said actuator, said control system being able to detect the momentary positions of said movable structure, due to said operating forces, and to transform said positions or said operating forces in first electrical signals; a control unit, connected with said actuator via pipings, and able to define the differences existing between the pressures of the fluid acting on two opposite surfaces of said operative part as a function of said first electrical signals and of second electrical signals representing predetermined momentary positions or predetermined momentary values of operating forces.

Examples of said movable structure are: the operating elements of automatic machines, the joints or the articulations and the grasping devices of a robot; examples of said operating forces are the forces transmitted to said joints or articulations for actuation thereof.

The invention will be described in great detail below by referring to the drawings which represent a not limiting embodiment in which:

Fig.1 represents a method for inserting a device according to the present invention in a robot;

Fig.2 is a control system for said device;

Fig.3 represents, in a different scale, an actuator fitting out the system shown in Fig.1, shaped like an articulation;

Fig.4 represents, in a different scale, an actuator fitting out the system shown in Fig.1, shaped like a joint.

The figures represent a device adapted to actuate remote straight-line and rotative movements with control of the forces transmitted.

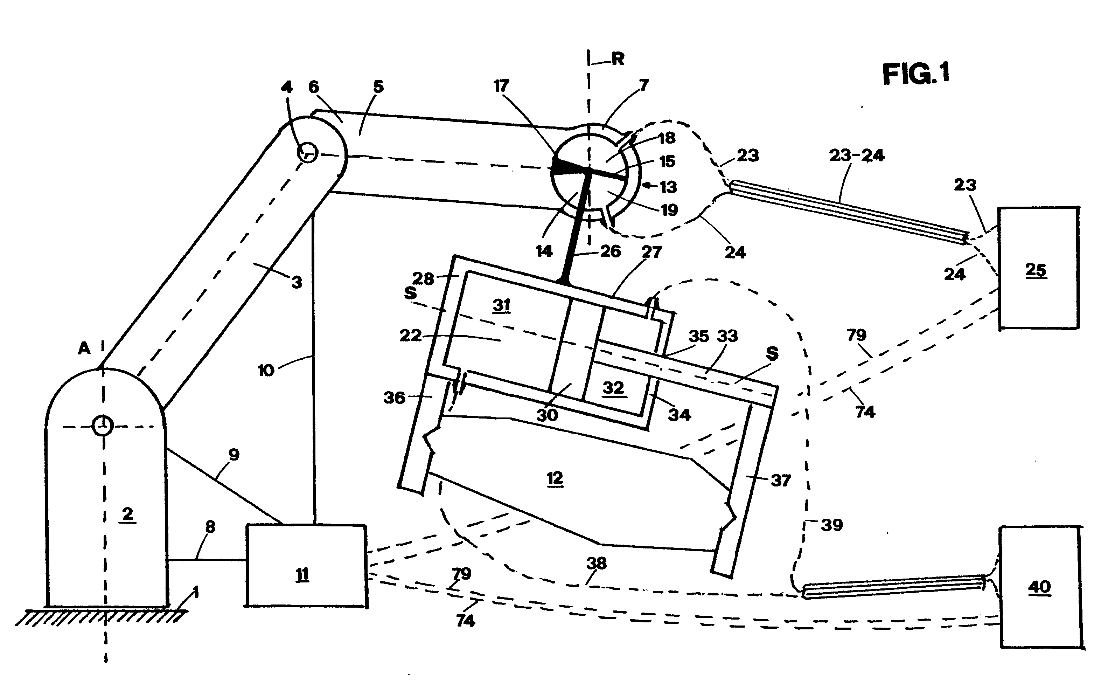

Fig.1 shows a method for inserting a device according to the present invention, in a robot; said robot comprising: a fix base 1, upon which a joint 2 is located, the joint 2 being rotatable about an axis of rotation A and being constrained relative to other movements; a first arm 3, articulated to said joint 2; a second arm 5, whose first end 6 is rotatable about an articulation 4 integral with said first arm 3.

Said joint 2, said first and second arms 3 and 5 constituting a structure having N degrees of freedom in which a second free end 7 of said second arm 5 carries out movements having trajectories compatible with the constraints.

Said joint 2, said arms 3 and 5 are connected, by the elements which will be described below and which are schematized by the segments 8, 9 and 10, with a control and operating system 11 for said robot which is also able to transmit said movement to said second end 7 to allow said second end 7 to be located correctly with respect to an object 12 to grasp.

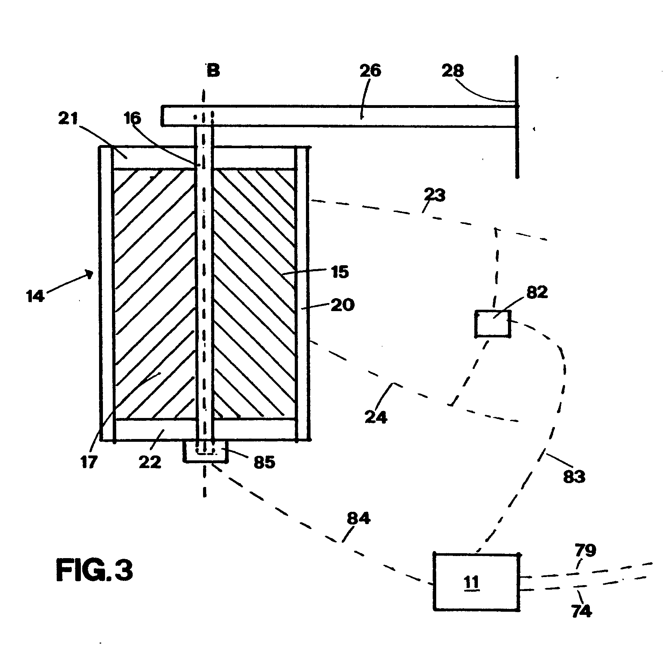

A first actuator 13 is located on said second end 7, said actuator 13 comprising a lifter, shaped like it is shown also in Fig.3, a hollow cylindric box 14, integral with said second arm 5, a movable sluice gate 15 angularly integral with a shaft 16, located on the symmetry axis B of said box 14 and a fix sluice gate 17, cooperating with said movable sluice gate 15 to separate a first chamber 18 from a second chamber 19, made within said box 14. Said first and second chambers 18 and 19 are full of oil and have a variable volume as a function of the angular position of said movable sluice gate 15 relative to a reference direction R.

To maintain the oil under pressure in said chambers 18 and 19, said box 14 is delimited by a cylindric wall 20 and by two covers 21 and 22, shown in Fig.3, spaced each from the other and perpendicular to said axis B. Said fix sluice gate 17 occupies, in the direction parallel to said axis B, a space included between said covers 21 and 22 and, in the direction perpendicular to said axis B, a space included between said wall 20 and said shaft 16. The movable sluice gate 15 is disposed in a similar way. Said first chamber 18 and said second chamber 19 are connected, via a first flexible piping 23 and a second flexible piping 24, respectively, with a first control unit 25 able, among other, to define the differences between the pressures of the oil masses held in said first and second chamber 18 and 19, respectively, and, thence, to define the angular position of said movable sluice gate 15 relative to said direction R.

Said control system 11 is connected by an electrical conductor 83, with a differential pressure transducer 82 which detects, moment by moment, the difference between the oil pressures existing in said first piping 23 and in said second piping 24 and converts it into an analogue electrical signal; furthermore, said control system 11 is connected, via an electrical conductor 84, with a transducer 85 of the angular position, which detects moment by moment the angular position of said shaft 16 and, thence, of said movable sluice gate 15 relative to said direction R, and converts it into an electrical signal. Said control system 11 is equipped with converters, not shown, to convert the analogue electrical signals to send to said unit 25.

For graphic semplicity, Fig.1 shows said pipings 23 and 24 partially in section.

Said first and second pipings 23 and 24 have a desired length to manintain said first control unit 25 away from said actuator 13 as one desires.

Along an opportune length, said first piping 23 is coaxial to said second piping 24.

A support rod 26, angularly integral with said shaft 16, supports a second actuator 27, which includes, among other, a body 28 of a first hydraulic cylinder 29 which houses a first piston 30, separating a third chamber 31 from a fourth chamber 32 located inside said first cylinder 29. Said shaft 16, which rotates with said rod 26, constitutes an articulation of said structure having N degrees of freedom.

Said third and fourth chambers 18 and 19 are full of oil and have a volume variable as a function of the position of said first piston 30 relative to a reference point arbitrarily choosen on the symmetry axis S of said cylinder 29.

A first stem 33 is integral with said first piston 30.

To prevent oil from excaping from said fourth chamber 32, a bottom wall 34 is provided to divide said fourth chamber 32 from the outside of said first cylinder 29; said wall 34 having a middle bore 35 to allow said first stem 33 to slide toward the outside of said fourth chamber 32; sealing elements, known and not shown, being present in said bore 35 to ensure oiltight in said fourth chamber 32.

Said body 28 is integral with a first grasping element 36; a second grasping element 37 is integral with said first stem 33; said first element 36 and said second element 37 cooperating each other to grasp said object 12.

Said third chamber 31 and said fourth chamber 32 are connected, via a third flexible piping 38 and a fourth flexible piping 39; respectively, with a second control unit 40 adapted to define, among other, the pressures of the oil masses held in said third and fourth chambers 31 and 32, respectively, thence the position of said piston 30 inside said cylinder 29.

Also said pipings 38 and 39 have been partially sectioned for graphic semplicity.

Said control system 11 is connected, via an electrical conductor, not shown, to a differential pressure transducer, not shown, which detects, moment by moment, the difference between the oil pressures existing in said third piping 38 and in said fourth piping 39 and converts it in an analogue electrical signal; besides, said control system 11 is connected, via an electrical conductor, not shown, with a position transducer, not shown, which detects, moment by moment, the position of said piston 30 within said cylinder 29 and converts it in an electrical signal.

Said control system 11 is fitted with converters, not shown, to convert the analogue form of the electrical signals coming from said transducers into a digital form to send to said unit 40. Said third and fourth pipings 38 and 39 have a desired length to allow said control unit 40 to be kept away from said second actuator 27 as desired.

Along an opportune length, said third piping 38 is coaxial to said fourth piping 39.

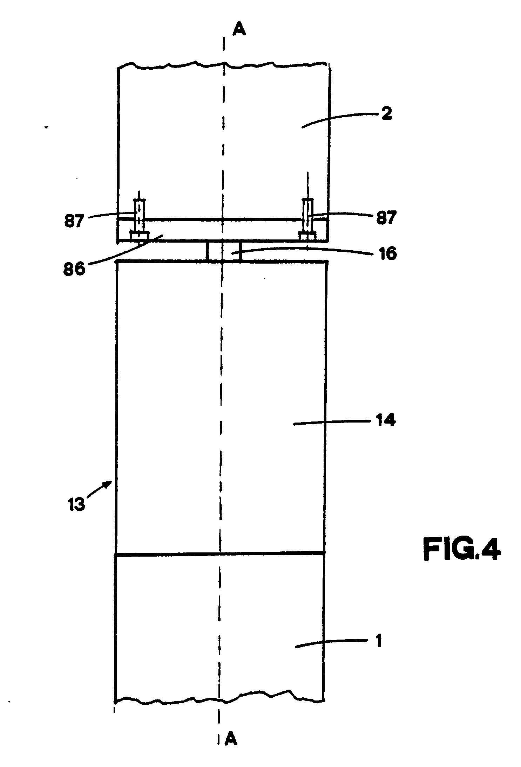

Fig.4 shows schematically the use of said actuator 13 in a joint between two adjacent elements of said structure having N dimensions.

Fig.4 does not show some of the elements held in or fitting out said box 14, which have been described and shown relative to Fig.1.

The connection rotatable about the axis A between said base 1 and said joint 2 is accomplished by said shaft 16, keyed on a plate 86 fixed to said joint 2 by fixing screws 87.

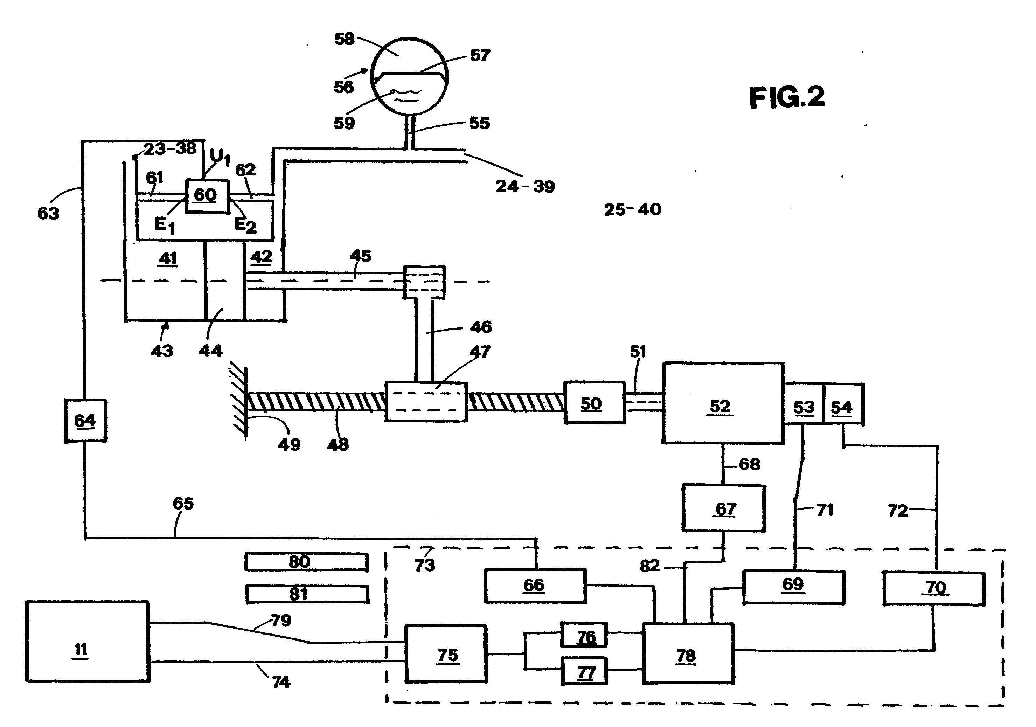

Fig.2 shows one of said control units 25 or 40 which are identical in the embodiment shown.

The mechanic parts of Fig.2 have been shown schematically void of thickness.

Said first or said third piping 23 or 38 opens in a fifth chamber 41, said second or said fourth piping 24 or 38 opens in a sixth chamber 42. Said fifth or sixth chambers 41 and 42 have variable volumes, since they are located inside a second hydraulic cylinder 43 and are divided by a second piston 44, able to translate within said cylinder 43. Said second piston 44 is fitted with a second stem 45 whose end external to said cylinder 43 is integral with a stiff rod 46 to connect said second stem 45 with a lead nut 47 connected with a rotating screw 48 supported at one free end thereof by a support 49. A second end of said screw 48 is inserted in an outlet of a revolutions reduction unit 50; the free end of a shaft 51 of an electric motor 52 being inserted in the inlet of said reduction unit 50.

By examining the attached drawings, it may be understood that the position of said second cylinder 43 is determined by the rotation of said shaft 51 and that on the position of said second piston 44 depends the angular position of said movable sluice gate 15 relative to said direction R, in case that Fig.2 is referred to said first control unit 25, or the position of said first piston 30, relative to a reference point arbitrarily choosen on the symmetry axis S of said first cylinder 29, in case that Fig.2 is referred to said second control unit 40.

Because of the incompressibility of the oil held in said pipings 23 and 24, 38 and 39, it is possible to state that there is a bi univocal correspondence between the positions of said second piston 44 and the angular positions of said movable sluice gate 15 or the position of said first piston 30; this biunivocal correspondence is due to the fact that the pressure variations in the mass of the oil held in said pipings 23, 24, 38 and 39, due to a shifting of said second piston 44, take place in a progressive way and pass from said second piston 44 to said movable sluice gate 15 or to said first piston 30 with the sound velocity inside the mass of the oil, thereby nearly nullifying the transient periods. This characteristic excludes any hysteresis in the transmission of the movement between said second piston 44 and said sluice gate 15 or said first piston 30.

A transducer 53 of the position of said second piston 44, thence of said sluice gate 15, or of said first piston 30 and a transducer 54 of the rotation velocity of said motor 52 are kinematically connected with said motor 52.

A channel 55 connectes said second or said fourth piping 24 or 39 to a plenum chamber consisting of a pressurized reservoir 56 including a diaphragm 57 adapted to divide a first room 58, internal to said reservoir 56 and housing nitrogen, from a second room 59 also internal to said reservoir 56 and housing oil. More precisely, said channel 55 connects said second or fourth piping 24 or 39 with said second room 59.

A differential pressure transducer 60 has a first inlet $E_1$ connected with said first or third piping 23 or 38 via a channel 61 and a second inlet $E_2$ connected with said second or fourth piping 24 or 39 via a channel 62; said pressure transducer 60 is able to convert the pressure difference between said first and second in lets $E_1$, $E_2$, that is between said first or third piping 23 or 38 or said second or said fourth piping 24 or 39 in an electrical signal whose value is expressed in analogue form.

A conductor 63 is located between an outlet $O_1$ of said differential pressure transducer 60 and a converter 64 to convert the analogue quantity of said electric signal into a digital quantity to send to a register 66 adapted to store said quantity which represents said pressure difference.

A current generator 67, fitted with a device, not shown, to invert the polarity, feeds said electric motor 52, via a conductor 68 and determines the rotation direction of said motor 52.

Said position transducer 53 is connected with a first memory 69 via a conductor 71 and said velocity transducer 54 is connected with a second memory 70 via a conductor 72.

An electronic unit 73 is connected via a first line 74 with said robot control system 11. Said electrical signals coming from said system 11 are sent through said line 74; said electrical signals representing the pressures differences are stored in a register 76 and the signals representing the position are stored in a register 77; said registers 76 and 77 containing the predetermined values of the difference between the oil pressure in said first and second pipings 23 and 24 or in said third and fourth pipings 38 and 39 and of the position of said movable sluice gate 15 or of said first piston 30, respectively.

Said electronic unit 73 includes a central processing unit CPU 78, electrically connected with said register 66 and with said first and second memories 69 and 70. Said unit 78 compares the value of the pressure difference desired at the instant considered stored in said register 76, with which said unit 78 is electrically connected, and the actual value, at the same instant, of the pressure differences stored in said register 66; besides, said unit 78 compares the desired position at the instant considered of said movable sluice gate 15 or of said first piston 30 stored in said register 77, with which said unit 78 is electrically connected, and the actual position, at the same instant, stored in said first memory 69 and, by basing on logic orders received from said line 78; sends to said current generator 67 signals enabled to determine if, in which direction and how much it is necessary to move said motor 52.

Said unit 73 is connected with said robot control system 11 via a second line 79, through which return electrical signals are sent to confirm the fulfilment of the operation ordered and/or to detect and, if necessary, to correct functioning anomalies.

Said logic orders, simply indicated as an example in the cells 80 and 81, may be of the type "grasp till you reach a certain pressure" or "open till you reach a certain pressure" or "reach a given position" or they may be a logic combination "and" or "or" of said orders.

## Claims

1. Device adapted to actuate remote straight-line and rotative movements with control of the forces transmitted comprising a hydraulic actuator (13,27) including an active part (15,30) able to carry out angular and straight-line movements and kinematically connected with a movable structure (26,37) to transmit operative forces to said structure (26,37); a control system (11) for said actuator (13,27); said control system (11) being able to detect the momentary position of said structure (26,37) due to said operative forces and to transform said positions or said forces in first electrical signals characterized by the fact that it comprises further a control unit (25,40) connected with said actuator (13,27) via pipings (23,24,38,39); said control unit (25,40) being able to define the difference between the fluid pressure acting on the two opposite surfaces of the operative part (15,30) as a function of said first electrical signals and of second electrical signals, stored in said control unit (25,40); said second electrical signals representing predetermined momentary positions or predetermined operative forces values.

2. Device, as in claim 1, characterized by the fact that said actuator (13) is kinematically connected with an articulation of a robot structure having N degrees of freedom.

3. Device, as in claim 1, characterized by the fact that said actuator (13) is kinematically connected with a joint of a robot structure having N degrees of freedom.

4. Device, as in claim 1, characterized by the fact that said actuator (27) is kinematically connected with a grasping device (36,37) of said robot.

5. Device, as in claims 1, 2 and 3, characterized by the fact that said actuator (13) consists of a lifter, inicluding an hollow cylindrical box (14) integral with an arm (5) of a movable sluice gate (15) integral with a shaft (16) located on the symmetry axis (B) of said box (14) and of a fix sluice gate (17), which cooperates with said sluice gate (15) to separate a first chamber (18) from a second chamber (19) made in said box (14); said first and second chambers (18,19) are full of oil and have a volume variable as a function of the angular position of said movable sluice gate (15) relative to a reference direction (R); said first chamber (18) and said second chamber (19) are connected, via a first flexible piping (23) and a second flexible piping (24), respectively, with a first control unit (25), able to define the pressures in the masses of oil held in said first and second chambers (18,19), respectively, thence to define the angular position of said movable sluice gate (15) relative to said axis (R).

6. Device, as in claim 1, characterized by the fact that said control unit (25,40) includes a differential pressure transducer (60) to measure the forces transmitted by said control unit (25,40) to said actuator (13,27).

7. Device, as in claim 1, characterized by the fact that said control unit (25,40) includes devices enabled to carry out grasps with with given forces or orders or with logic combinations of the two.

8. Device, as in claims 1 and 4, characterized by the fact that a support rod (26) angularly integral with said shaft (16) is provided for supporting said actuator (27); said actuator (27) comprising: a body (28) of a first hydraulic cylinder (29); a first piston (30) housed in said first hydraulic cylinder (29) and integral with a first stem (33); said first piston (30) dividing a third chamber (31) from a fourth chamber (32); said third and fourth chambers (31,32) are full of oil and have a volume variable as a function of the position of said first piston (30) relative to a reference point arbitrarily choosen on the symmetry axis (S) of said cylinder (29); said third chamber (31) and said fourth chamber (32) are connected, via a third flexible piping (38) and a fourth flexible piping (39), respectively, with a second control unit (40), able to define the pressures in the oil masses, held, respectively, in said third and fourth chambers (18,19) thence the position of said piston (30) within said cylinder (29); said body (28) is integral with a first grasping element (36); a second grasping element (37) is integral with said first stem (33); said first element (36) and said second element (37) cooperating each other to grasp an object (12).

9. Device, as in claims 1, 5 and 8, characterized by the fact that along an opportune length, said first and said third piping (23,38) are coaxial to said second and fourth piping (24,39), respectively.

10. Device, as in claim 1, characterized by the fact that said first or said third piping (23,38) opens in a fifth chamber (41) and by the fact that said second or fourth piping (24,39) opens in a sixth chamber (42); said fifth and sixth chambers (41,42) have variable volumes since they are located inside a second hydraulic cylinder (43) and since they are divided by a second piston (44) able to translate inside said cylinder (43); said second piston (44) is fitted with a second stem (45) whose end external to said second cylinder (43) is integral with a stiff rod (46) to connect said second stem (45) with a lead nut (47) connected with a rotating screw (48); said screw (48) is kinematically connected with an outlet of a revolutions reducer (50) whose inlet is connected with a shaft (51) of an electric motor (52); said motor (52) being kinematically connected with a position transducer (53) of said second piston (44) and with a velocity transducer (54); said position transducer (53) being electrically connected with a first memory (69) and said velocity transducer (54) being electrically connected with a second memory (70).

11. Device, as in claim 1, characterized by the fact that said control unit (25,40) comprises an electronic unit (73) connected via a line (74,79) to a control system (11) for the robot; along said line (74,79) suitable signals are sent which are separated by a multiplexer (75) and are stored in two registers (76,77) which contain, respectively, predetermined values of the pressure difference and of the position; said electronic unit (73) comprising further a control processing unit CPU (78) which compares the values of the desired pressure difference stored in said register (76) and the actual value stored in said register (76) and the desired position stored in said register (77) and the actual position stored in said first memory (69) and, by basing on logic orders received from said line (74) determines if and in which direction said motor (52) must be moved.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3632151 (FRITZ SCHUNK) <br> * the whole document * | 1-11 | B25J15/02 |
| A | US-A-4730862 (CAEN ET AL.) <br> * the whole document * | 1-11 | |
| A | OLEODINAMICA, PNEUMATICA. <br> vol. 27, no. 09, September 1986, MILANO IT <br> pages 66 - 75; Radcenko: <br> "Cenni sui robot industriali:Applicatione di sistemi pneumatici." <br> * pages 66 - 75 * | 1-11 | |
| A | OLEODINAMICA, PNEUMATICA. <br> vol. 27, no. 10, October 1986, MILANO IT <br> pages 93 - 101; Radcenko: <br> "Cenni sui robot industriali:Applicazione di sistemi pneumatici." <br> * pages 93 - 101 * | 1-11 | |

TECHNICAL FIELDS SEARCHED (Int. Cl.5 )

B25J

The present search report has been drawn up for all claims

| Place of search | Date of completion of the search | Examiner |
|---|---|---|
| THE HAGUE | 25 JANUARY 1990 | RESSENAAR J.P. |